(19) **Europäisches Patentamt / European Patent Office / Office européen des brevets**

(11) **EP 1 726 109 B1**

(12) **EUROPEAN PATENT SPECIFICATION**

(45) Date of publication and mention
of the grant of the patent:
**02.11.2011 Bulletin 2011/44**

(21) Application number: **05723278.7**

(22) Date of filing: **18.02.2005**

(51) Int Cl.:
***H04B 10/10*** (2006.01)

(86) International application number:
**PCT/US2005/005196**

(87) International publication number:
**WO 2005/093972 (06.10.2005 Gazette 2005/40)**

(54) **METHOD AND APPARATUS FOR FREE SPACE OPTICAL COMMUNICATION USING INCOHERENT LIGHT**

VERFAHREN UND VORRICHTUNG ZUR LEITUNGSUNGEBUNDENEN OPTISCHEN ÜBERTRAGUNG UNTER VERWENDUNG VON INKOHÄRENTEM LICHT

PROCEDE ET APPAREIL POUR UNE COMMUNICATION OPTIQUE A ESPACE LIBRE COMPRENANT UN ECLAIRAGE INCOHERENT

(84) Designated Contracting States:
**AT BE BG CH CY CZ DE DK EE ES FI FR GB GR HU IE IS IT LI LT LU MC NL PL PT RO SE SI SK TR**

(30) Priority: **02.03.2004 US 790093**

(43) Date of publication of application:
**29.11.2006 Bulletin 2006/48**

(73) Proprietor: **ITT Manufacturing Enterprises, Inc.**
**Wilmington, Delaware 19801 (US)**

(72) Inventor: **WINSOR, Robert, S.**
**Round Hill, VA 20141 (US)**

(74) Representative: **Steimle, Josef et al**
**Dreiss Patentanwälte**
**Postfach 10 37 62**
**70032 Stuttgart (DE)**

(56) References cited:
| | |
|---|---|
| **US-A- 4 799 797** | **US-A- 5 062 150** |
| **US-A- 5 264 955** | **US-A- 5 381 250** |
| **US-A- 5 543 952** | **US-A- 5 777 768** |
| **US-A- 5 786 923** | **US-A- 5 870 215** |
| **US-A1- 2002 109 884** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention pertains to free space optical communication. In particular, the present invention pertains to the use of a phase incoherent light source to reduce atmospheric scintillation within a free space optical transmission.

2. Description of the Related Art

U.S. Patent 5,264,955 discloses a method and a system comprising the features of the preamble of claims 1, 15 and 27. The patent describes an optical space communication apparatus such as an optical space communication transceiver, which comprises a means for amplifying a modulated signal, driving a light emitting element, such as a light-emitting diode or a semiconductor laser, and a plurality of modules which can be coupled and separated from each other. In the modules, the positions of optical elements are adjusted beforehand with respect to coupling reference portions on the modules which are to constitute a common reference at the time of coupling the modules. This way the optical space communication apparatus solves problems posed by installation, repairing and maintenance of the apparatus.

U.S. Patent Application Publication US 2002/0109884 discloses an electronically agile multi-beam optical transceiver that has a crossbar switch, which switches input signals to selected ones of a spatial array of light emitters, such as lasers or light emitting diodes.

The light emitters supply modulated light beams to spatial locations of a telecentric lens, which geometrically transforms the beams along different divergence paths, in accordance with displacements from the lens axis of the light emitter elements within the spatial array. Light beams from remote sites incident on a divergence face of the telecentric lens are deflected to a photodetector array, outputs of which are coupled to a second crossbar switch.

U.S. Patent 5,777,768 discloses a method for establishing a laser link communication system in free space that includes first and second terminals, which are distanced from each other on an optical path. Each terminal includes a plurality of laser transmitters, which together generate a plurality of laser beams, with each of the laser beams carrying a communication signal Further, each terminal directs its independently generated laser beams along substantially parallel paths. Though their paths are substantially parallel, the transmitted beams generally overlap in the far field, at the other terminal, where they are collected and summed for reception and analysis of the communication signal. Thus, the method of US 5,777,768 combats scintillation by providing a plurality of redundant light sources.

Free space optical (FSO) communication (FSOC), commonly referred to as lasercomm, has emerged in recent years as an attractive alternative to conventional Radio Frequency (RF) communication. One of the biggest challenges facing free space optical communication in links that travel through the lower atmosphere is atmospheric scintillation.

Scintillation may be defined as rapid variation in signal intensity level. For free space optical communication, scintillation causes loss of data due to a loss of signal. As light travels through the atmosphere, turbulence may affect the path that the light follows. In the case of a free space optical communication link, atmospheric turbulence may manifest itself as beam wander, speckle, or a combination of beam wander and speckle. Beam wander is caused by atmospheric turbulence randomly bending an optical beam away from an intended receiver.

Beam wander causes scintillation due to the fact that the optical beam is bent away from the intended receiver and a portion, or all, of the optical beam is not received. Depending upon how severely the optical beam is bent, scintillation due to beam wander may be reduced by using an active pointing system to track the optical beam and to dynamically adjust the optical transmitter and/or optical receiver to compensate for beam wander.

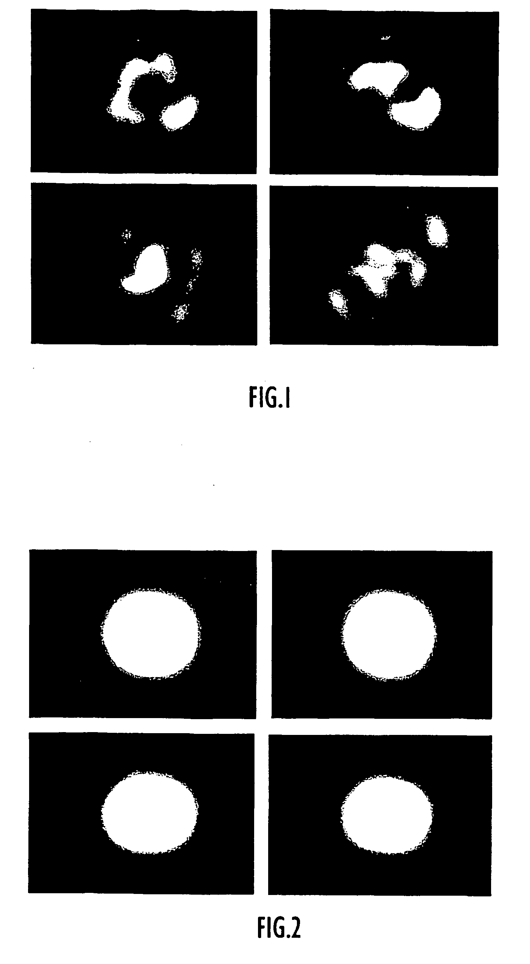

Speckle is typically caused by atmospheric turbulence randomly bending portions of a coherent beam, resulting in interference within the propagated beam, as described in greater detail below. As shown in FIG. 1, speckle typically results in nonuniform intensity patterns, involving very dark and bright spots within a transmitted beam. As a propagated beam is received and speckle patterns change over a receiver, the varying regions of bright and dark create scintillation in the received signal. Speckle patterns are typically stochastic and may change in frequency from a few hertz to as high as 100Hz depending on atmospheric conditions.

Historically, lasers have been the preferred light source for use in free space optical communication due to the heritage of laser devices in fiber-optic-based communication networks. Although other light sources have been used for fiber optic communication, lasers have been the light source of choice due to characteristics that work well in long-haul, high data rate links in which optical fiber serves as the transport media through which the laser light is transmitted. For example, use of narrow-bandwidth laser-generated light in optical-fiber-based transmissions reduces the effect of fiber dispersion, or group velocity dispersion, and allows many wavelength-based channels to be transmitted within a narrow spectral range, thus allowing a greater number of wavelength channels to be transmitted along a single physical optical fiber.

Unfortunately, another characteristic of light produced by a laser is that laser light demonstrates strong phase coherence. For example, in a typical telecommunication laser, the ratio of light that has phase coherence to that of spontaneous emission (the component of laser light that is phase incoherent) is on the order of 70 dB or more. Such strong phase coherence makes laser light particularly susceptible to atmospheric scintillation. When a laser beam travels through the atmosphere, portions of the beam are bent while other parts of the beam remain on their normal trajectory. As the bent portions of the beam are steered by subsequent atmospheric bending onto the rest of the beam, destructive interference occurs. Due to the high degree of phase coherence in laser light, the interference of these beams is significant and results in speckle. Thus, although lasers are a proven, highly-effective source of light for communication across a uniform optical fiber transmission media, laser light is not as effective for use in free space optical communication in which the transmission media is dynamic and/or turbulent.

Historically, scintillation due to speckle has been difficult to control. The deep fades that occur from speckle can last as long as several refresh rates of an optical receiver's control system. This lack of information leaves not only a gap in the received data stream but also a gap in the received active pointing information. Once the fade has passed, the control system has to make larger corrections in order to "catch up" to where the transmission should have been had there not been a loss in signal. As a result, the effects of scintillation may cause frequent and brief but damaging fades in signal level. The result is a loss in data throughput and reduced optical link availability.

Traditional methods for mitigating the effects of speckle include the use of adaptive optics, the use of higher powered lasers, and/or alternating methods used to send data in an attempt to route around the signal fades. Unfortunately, such approaches do not eliminate scintillation but merely attempt to compensate for the deleterious effects of scintillation upon a free space optical transmission.

Hence, a need remains for an apparatus and method capable of reducing and/or eliminating scintillation in free space optical transmissions. Preferably, such an approach would not require an adaptive optics control loop to correct for scintillation and, therefore, would not require a portion of a received optical signal to drive a wavefront sensor that is typically associated with such adaptive optics control loops. Further, the approach would preferably not increase the size, weight, complexity, power consumption or cost of remaining free space optical link components. In addition, by eliminating the effects of scintillation upon a free space optical link such an approach would preferably allow free space optical communication at even greater distances than would be possible at the same level of amplification using lasers. By mitigating the effects of scintillation, such an approach would preferably result in a free space optical link with increased availability and a decreased bit error rate, thereby reducing the amount of retransmitted data, packet re-routing, and dropped packets and contributing to improved network performance and reliability.

OBJECTS AND SUMMARY OF THE INVENTION

Therefore, in light of the above, and for other reasons that may become apparent when the invention is fully described, an object of the present invention is to reduce and/or eliminate signal scintillation that is the result of signal speckle.

Another object of the present invention is to eliminate the need for adaptive optical control loops used to correct speckle in a received signal.

Yet another object of the present invention is to increase the effectiveness of adaptive tracking and control systems used to reduce scintillation due to beam wander.

Still another object of the present invention is to increase the distance that may be supported by an optical link using a light source of any specific power or amplification.

A further object of the present invention is to increase the availability, reliability, and throughput that can be achieved with optical links, despite harsh environments and extreme temperature conditions.

A still further object of the present invention is to decrease the cost, size, weight, power requirements, complexity and service requirements associated with optical links.

The aforesaid objects are achieved individually and in combination, and it is not intended that the present invention be construed as requiring two or more of the objects to be combined unless expressly required by the claims attached hereto.

A method and apparatus is described for a free space optical communication link that transmits and receives an optical signal using phase incoherent light. In one exemplary, nonlimiting embodiment, the phase incoherent light may be emitted by a Superluminescent Light Emitting Diode (SLED). Use of phase incoherent light reduces signal scintillation by significantly reducing the occurrence of speckle in the transmitted signal. The result is an optical link that does not need an adaptive optical control loop to correct for speckle nor need to bleed off a portion of the received optical power to drive a wavefront sensor. The phase incoherent free space optical link of the present invention may modularly replace the conventional, laser-based phase-coherent free space optical link typically used in free space optical link systems. Use of the described apparatus and methods results in reduced system size, reduced system weight, reduced system complexity, reduced power consumption, a lower initial system cost, a reduced failure rate, a decreased bit error rate, lower lifecycle maintenance costs, greater reliability, greater link availability, increased link throughput and improved network performance.

The above and still further objects, features and advantages of the present invention will become apparent upon consideration of the following detailed description of specific embodiments thereof, particularly when taken in conjunction with the accompanying drawings wherein like reference numerals in the various figures are utilized to designate like components.

BRIEF DESCRIPTION OF THE DRAWINGS

FIG. 1 presents four representative examples of speckle within a beam of light as might be viewed at separate points in time by a free space optical receiver upon receipt of an initially coherent beam of light that has passed through atmospheric turbulence.

FIG. 2 presents four representative examples of a beam of light as might be viewed at separate points in time by a free space optical receiver upon receipt of an initially incoherent beam of light that has passed through the same atmospheric turbulence that generated the distorted optical signal represented in FIG. 1.

FIG. 3 is a data chart presenting the index of refraction v. wavelength for light passing through optical fiber fused silica.

FIG. 4 is a data chart presenting the index of refraction v. wavelength for light passing through air.

FIG. 5 is a representative block diagram of a free space optical transmitter and a free space optical receiver in accordance with an exemplary embodiment of the present invention.

FIG. 6 is a process flow diagram for transmitting a beam of incoherent light in accordance with an exemplary embodiment of the present invention.

FIG. 7 is a process flow diagram for receiving a beam of incoherent light in accordance with an exemplary embodiment of the present invention.

FIG. 8 is a representative comparison of expected power measurements as may be recorded by a free space optical receiver for an incoherent beam of light and a coherent beam of light, each of the same initial intensity, after each beam has passed through the same atmospheric turbulence, but without an active pointing system to correct for beam wander.

DETAILED DESCRIPTION OF THE PREFERRED EMBODIMENTS

As described with respect to FIG. 1, conventional free space optical communication links that transmit and receive coherent, laser-generated light are plagued by a form of distortion, commonly referred to as speckle. Speckle is the result of destructive interference as atmospheric turbulence introduces phase shifts to portions of a largely coherent beam of laser-generated light and then randomly deflects the phase shifted and un-shifted portions of the beam into one another, resulting in destructive interference within the transmitted signal.

The method and apparatus for free space optical communication, described here, is based upon the transmission of substantially phase incoherent light. Given that the transmitted beam is phase incoherent, phase shifts introduced by atmospheric turbulence do not result in a significant degree of destructive interference; hence, speckle in the transmitted signal is virtually eliminated. To illustrate, FIG. 2 presents four representative examples of a beam of light as might be viewed at separate points in time by a free space optical receiver upon receipt of an initially incoherent beam of light that has passed through the same atmospheric turbulence that generated the distorted optical signal represented in FIG. 1.

In accordance with the present invention, any source of phase incoherent light may be used, so long as a beam of sufficient intensity is achieved to support the free space distance to be spanned by the optical communication link. A typical free space communication link of approximately 1 km requires approximately one milliwatt of transmitted power. A conventional single mode optical-fiber-coupled light emitting diode (LED) is typically capable of propagating no more than 100 microwatts of transmitted power into the optical fiber to which the LED is coupled. However, single mode optical-fiber-coupled superluminescent LEDs (SLEDs) have recently been developed, each capable of propagating as much as 20 milliwatts of power into the optical fiber to which the SLED is coupled. The incoherent light produced by such an optically coupled SLED is sufficient to support a free space optical link of significant distance, without a need for amplification.

SLEDs typically generate phase incoherent light (i.e., generate phase incoherent photons) based upon a process known as spontaneous emission. Spontaneous emission based processes typically generate light that includes a broader spectrum of wavelengths than the phase-coherent light produced using light amplification by the stimulated emission of radiation (i.e., laser) based processes.

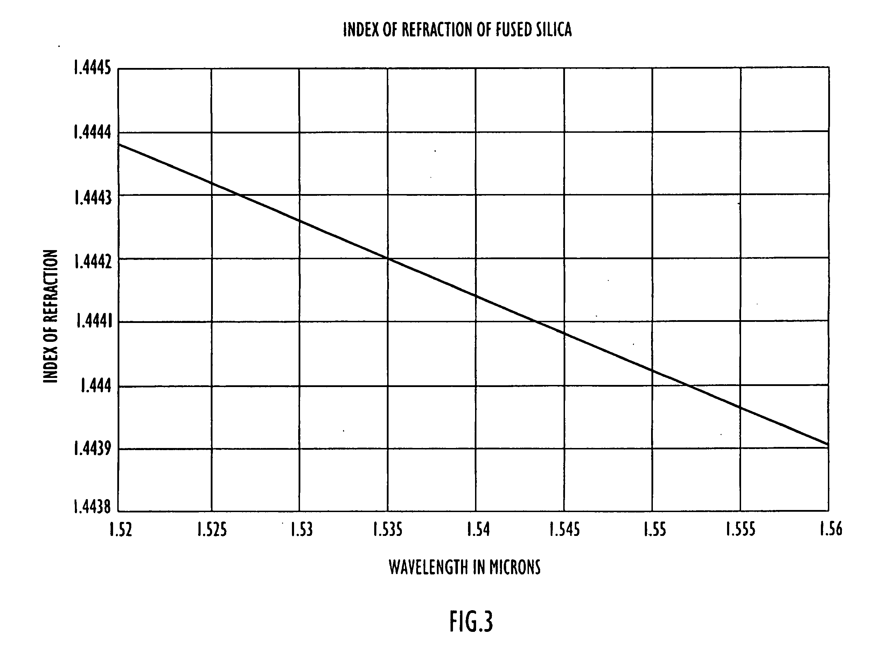

As demonstrated by FIG. 3, the index of refraction for fused silica 300 (i.e., the material typically used to produce optical fiber) is significantly higher for shorter wavelengths than for longer wavelengths. As a result, shorter wavelengths of light within a pulse of light generated by an LED do not pass through an optical fiber at the same speed as longer wavelengths of light within the same pulse of light. This effect, known as dispersion or group dispersion, has the effect of physically and temporally stretching a pulse of light. Such pulse stretching reduces the maximum transmission rate that can be achieved, using broader spectrum LED-generated light, to below the maximum transmission rate that could otherwise be achieved using narrower spectrum laser-generated light. For this reason, the trend in fiber-optic-based communication has been to use narrow-bandwidth laser light in order to maximize transmission rates by reducing the effects of dispersion. Use of a narrow-bandwidth of light also maximizes the number of wavelength-based channels that may be simultaneously transmitted within any given spectral range, thereby further increasing total optical fiber data throughput.

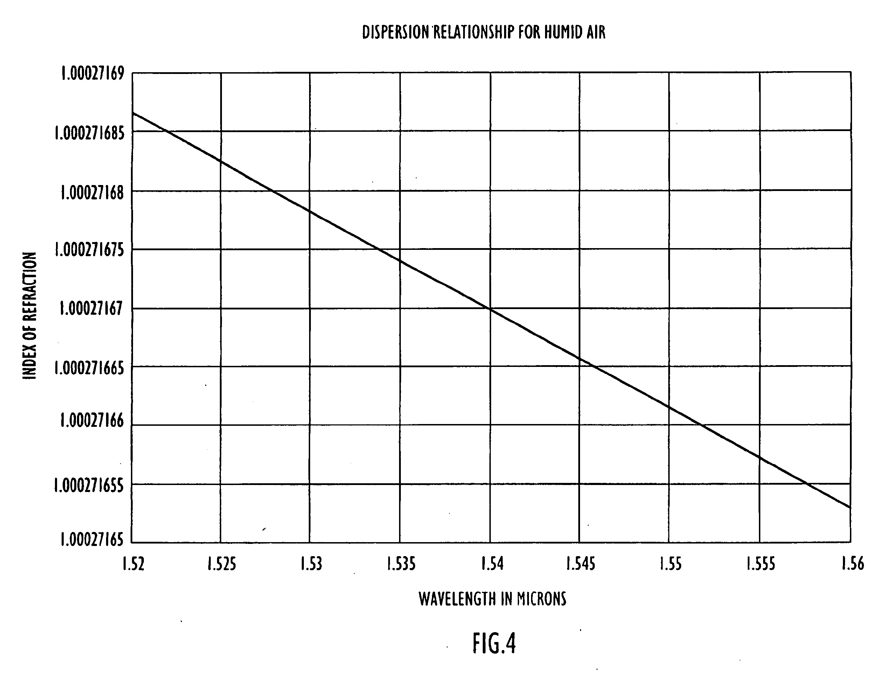

Fortunately, dispersion plays a far less significant role in the transmission of light through free space. As demonstrated by FIG. 4, the change in the index of refraction of humid air 400 for the same spectrum of wavelengths represented in FIG. 3, is significantly less than the change in the index of refraction of optical fiber fused silica. In fact, the slope representing the change in index of refraction (dn) versus the change in wavelength (d$\lambda$), or (dn/d$\lambda$), as shown in FIG. 4, is approximately four orders of magnitude lower for humid air than for fused silica over the same range of wavelengths.

As a result, and in accordance with the present invention, broader spectrum phase incoherent light may be used in a free space optical transmission system to eliminate the effects of atmospheric speckle without experiencing the negative performance due to dispersion that is encountered by broader spectrum light in optical-fiber-based systems.

For example, the bit rate capability of an SLED illuminated free space optical link may be determined from the relationship described below by EQ1:

$$BLD\sigma_\lambda \leq \frac{1}{10} \qquad\qquad (EQ1)$$

with *D* defined as the dispersion parameter, as described below by EQ2:

$$D = \frac{1}{c}\frac{dn}{d\lambda} \qquad\qquad (EQ2)$$

wherein *B* is the bit rate, *L* is the link distance, *c* is the speed of light, and $\sigma_\lambda$ is the spectral width of the SLED. Assuming a dispersion parameter for the atmosphere is $D_{atmos} \approx 2.8fs/(km \cdot nm)$ for a typical SLED bandwidth of 40nm or less, a Bit-rate Length product of 893(Gb/s)-km results. Based upon the relationships described by EQ1 and EQ2, free space optical communication at 2.5 Gbps for link distances in excess of 350km may be achieved. Further, based upon the relationships described by EQ1, and EQ2, free space optical communication at 10 Gbps for link distances of approximately 90km may be achieved. Note that these calculations assume that the entire path through which the beam of light travels is a stable atmosphere at 100% humidity. Further, EQ1 assumes that a bit slot may not be broadened any more than 10%. EQ1 and EQ2 demonstrate that phase incoherent light produced with an SLED may be used in virtually any free space communication system in which laser-generated light is conventionally used.

A common misconception regarding the broader spectrum and phase incoherent light emitted by an SLED is that a beam of such light can not produce as narrow a beam divergence as can be achieved using the narrower spectrum and phase-coherent light produced with a laser. In fact, a beam produced with an SLED does not have a larger divergence than a comparable beam produced with a laser. The divergences are identical. There is no "power penalty" through the use of SLEDs as compared with lasers.

The physical equation that governs the limiting divergence of a diffraction-limited beam of light is given by EQ3, below:

$$\theta \cong 2.44\,\lambda/D \q\qquad\qquad (EQ3)$$

wherein $\theta$ is the full-width beam divergence, *D* is the diameter of a telescope aperture (or diameter of the collimated beam at the aperture), and $\lambda$ is the wavelength. Although EQ3 assumes a uniform beam illumination, as opposed to the Gaussian illumination of a laser beam, the correction to EQ3 due to Gaussian apodization is minor and results in only a minor increase in the determined divergence value. Note that there is no phase coherence term in EQ3; therefore, the phase characteristics of a beam of light have no effect upon the divergence of the beam. The broader bandwidth of the SLED means that the divergence of the beam is dictated by the longer wavelengths, but this is also true of laser-generated beams.

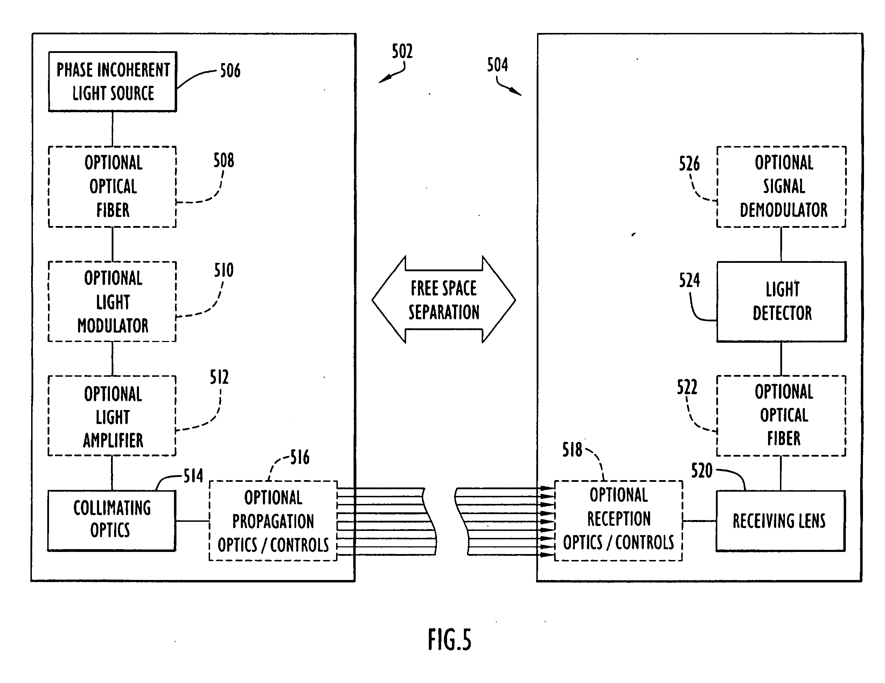

FIG. 5 presents a block diagram of a free space optical transmitter 502 and a free space optical receiver 504 in accordance with an exemplary embodiment of the present invention. As shown in FIG. 5, free space optical transmitter 502 may include phase incoherent light source 506, optional optical fiber 508, optional light modulator 510, optional light amplifier 512, collimating optics 514, which may include a lens or a mirror, and optional propagation optics/controls 516. Free space optical receiver 504 may include optional reception optics/controls 518, receiving lens 520, optional optical fiber 522, light detector 524 and optional signal demodulator 526.

If the optional components identified for free space optical transmitter 502 are excluded, an unmodulated phase incoherent free space beacon transmitter is achieved that includes phase incoherent light source 506 and a collimating optics 514 that collimates light received from phase incoherent light source 506 and propagates the collimated light across a free space to free space optical receiver 504. Such an embodiment may be used to propagate an unmodulated incoherent light beam to an optical receiver across a significant free space distance, as described above with respect to EQ1 and EQ2.

However, with the addition of one or more of the optional components shown in FIG. 5, a high-speed phase incoherent free space optical transmitter may be achieved that is capable of providing high-speed transmission rates over significant distances while greatly reducing the impact of atmospheric speckle, as described above. In such an embodiment, phase incoherent light source 506 may be a fiber-coupled superluminescent light emitting diode (SLED) that emits a phase incoherent beam of approximately 20mW of power over a spectral range of as little as 35nm into optional optical fiber 508. Optical fiber 508 may be used to route the generated phase incoherent light between the other modules included in free space optical transmitter 502, namely an optional light modulator 510, and optional light amplifier 512, collimating optics 514 and propagation optics/controls 516.

With respect to optional light modulator 510, there are many methods that may be used to modulate data upon an optical beam of light. One popular approach is to "turn off' or "turn on" the optical beam signal to represent a bit slot. Such an On-Off approach may use a Return to Zero (RZ) or a Non Return to Zero (NRZ) method. It should be noted that SLEDs are not well suited for internal modulation at high data rates. Given that SLED light emission is based upon a process of spontaneous emission, as described above, the upper energy state lifetime of the semiconductor material may be too long for internal modulation to allow high data rates. Fortunately, SLED-generated light may be modulated using the same external modulation techniques conventionally used with laser-generated light, as described below.

In one exemplary, externally-modulated embodiment, optional light modulator 510 may be implemented using a Lithium Niobate ($LiNiO_3$) Mach-Zender interferometer. Such a device breaks a beam of light into two beams, inserts a n phase delay into one of the beams whenever a "0" is needed and inserts no phase delay when a "1" is needed. Recombining the two beams results in mutual interference that causes the combined beam to turn off or turn on, respectively. Even though a beam of light generated with an SLED has a broader spectrum than light generated with a laser, SLED-generated light is still narrow enough for an $LiNiO_3$ modulator to work well. For reliable free space optical communications, an extinction ratio of at least 20dB should be used. A beam of light generated with an SLED with a spectrum as wide as 40nm will experience an extinction ratio near 40dB using a standard Lithium Niobate Mach-Zender type data modulator. Band limiting an SLED for purpose such as wave division multiplexing, as described below, further increases this extinction ratio.

If the distance to be supported by the optical free space link requires power greater than the phase incoherent light source 506 can generate, optional light amplifier 512 may be included to amplify the incoherent light (optionally modulated) emitted from phase incoherent light source 506. For example, an Erbium Doped Fiber Amplifier (EDFA) may receive light from optional light modulator 510 via optional optical fiber 508 and amplify the received light.

An EDFA amplifies light coherently. Any incoming phase is reproduced in the amplified signal. Given that the light received by optional light amplifier 512 is incoherent, the output generated by optional EDFA light amplifier 510 is also incoherent, but at an amplified intensity. To help clarify this point, consider a SLED with a 1mW output. There are millions of billions of photons being generated (about 8 million-billion photons per second), and each photon can be thought of as having a unique phase. These photons may be amplified through the EDFA, for example to an output power of 20W. To achieve such amplification, each photon is amplified 43dB. So, one individual photon that has a given phase has been transformed into 20,000 photons with the same phase. Although these 20,000 photons will interfere with one another in the same manner as coherent light generated by a laser interferes with itself, as described above, there are still millions of billions of other photons with which these amplified coherent photons will not interfere. Therefore, amplifying phase incoherent light generated by an SLED through the use of any coherent amplifier, such as an EDFA, produces no significant degradation in performance. In one alternate embodiment, the need for optional light amplifier 512 may be avoided by using multiple SLEDs to pump the same optical fiber. Such an approach substantially reduces the cost of high-power SLED communication by eliminating the need for an EDFA.

Collimating optics 514 receives phase incoherent light (which, optionally, has been modulated and/or amplified) and collimates the received light. For example, if free space optical transmitter 502 is configured to propagate light directly from the collimating optics, a gradient index (GRIN) lens may be used to collimate light received via optional optical fiber 508 by gradually varying the index of refraction within the lens material of the optical element. By precisely controlling a radial variation of the lens material's index of refraction from the optical axis to the edge of the lens, the GRIN lens may smoothly and continually redirect light beam into a collimated beam without the need to tightly-control the surface curvature. An anti-reflective coating may be applied to the end face of the GRIN lens to avoid unwanted back reflection. Alternatively, collimating optics 514 may be a conventional lens or mirror that receives optionally modulated and optionally amplified phase incoherent light via optional optical fiber 508 and collimates the received light.

Depending upon the distance and nature of the link to be supported by free space optical transmitter 502 an embodiment may optionally include optical beam propagation optics and/or active pointing and tracking controls 516. For example, collimating optics 514 may project collimated light upon a lens or mirror of a telescope. Such propagation optics may be part of an active pointing and tracking control system designed to reduce scintillation due to beam wander, as described above. Depending upon the distance supported by the optical link, however, such propagation optics and beam controls may not be required.

Active pointing and tracking techniques typically make use of a sensor that is placed at the focal point of a telescope. In laser-based optical links the phase coherence of the laser-generated light produces speckle patterns at the focal point of the telescope similar to that described with respect to FIG. 1, but to a somewhat lesser degree. As described above, the deep fades that occur from speckle can last as long as several refresh rates of the active pointing and tracking control system. This lack of information leaves not only a gap in the data stream but also a gap in the pointing information. When the fade has passed, the control system is required to make larger corrections in order to "catch up" to where it should have been had there not been a loss in signal. Therefore, by reducing and/or eliminating the deep fades due to speckle, the present invention facilitates more accurate pointing and tracking and thereby further reduces contributions to scintillation caused by beam wander.

In one exemplary embodiment, the free space optical transmitter of the present invention is configured to perform wavelength division multiplexing (WDM). Assuming that the phase incoherent light source 506 is an SLED that produces approximately 20mW of power over a spectral range of 35nm, an exemplary WDM embodiment may break the bandwidth of 35nm into 4 channels with 8nm spacing, each channel having a bandwidth of 6nm with each channel modulated by a light modulator at up to 10Gbps per wavelength channel.

In laser-based systems, wavelength division multiplexing is commonly used in which channel spacings are 1 00GHz wide. Each channel uses a laser with a linewidth of a fraction of a nanometer. For a SLED to work in such a system, its wavelength band would have to be limited to less than 0.5nm. For a 20mW SLED that produces a 35nm linewidth, such a band limited SLED would have a power of less than 250 $\mu$watts, which may not be sufficient power for some applications. However, by using multiple SLEDs to pump the same fiber, or by amplifying the light using light amplifiers, additional power per wavelength channel may be generated, if needed.

One advantage of such an SLED-based WDM embodiment, in which each wavelength channel is established by band-filtering light emitted from an SLED, is that each wavelength channel would remain stable under extreme environmental conditions that would otherwise affect the wavelength stability of a similar, laser-based WDM implementation. Therefore, such an SLED-based WDM embodiment would be capable of operating under extreme environmental conditions that would cause a laser-based WDM implementation to fail due to wavelength instability caused by the effect of extreme heat and/or extreme cold upon internal laser processes.

Referring again to FIG. 5, free space optical receiver 504 may include optional reception optics/controls 518, receiving lens 520, optional optical fiber 522, light detector 524 and optional signal demodulator 526. The components included within free space optical receiver 504 may be matched to support the components and features included in free space optical transmitter 502, as described above.

If free space optical transmitter 502 is configured as an unmodulated phase incoherent free space beacon, by excluding optional components identified for free space optical transmitter 502, free space optical receiver 504 may be similarly configured. Such an exemplary optical receiver embodiment may include receiving lens 520 to receive the incoherent beam of light from free space and to focus the received beam of light upon a light detector 524 that is capable of detecting the presence or absence of light. Such an embodiment may be used to receive an unmodulated incoherent light beam from free space optical transmitter 502 across a significant free space distance, as described above with respect to EQ1 and EQ2, and may be incorporated within a larger system that is notified by light detector 524 of the presence or absence of a light signal from free space optical transmitter 502.

However, if free space optical transmitter 502 is configured as a high-speed phase incoherent free space optical transmitter, capable of achieving high-speed optical transmission rates over significant distances while greatly reducing the impact of atmospheric speckle, as described above, free space optical receiver 504 may be configured to receive and process high-speed optical transmissions.

In such an embodiment, free space optical receiver 504 may include optional reception optics/controls 518, receiving lens 520, optional optical fiber 522, light detector 524 and optional signal modulator 526. As described above with respect to free space optical transmitter 502, optional optical reception optics/controls 518 may include reception optics, such as a telescope and/or active pointing and tracking controls. Receiving lens 520 may be any conventional or GRIN based lens capable of receiving light, either directly from free space or from the optional reception optics/controls component 518, and focusing the received light upon light detector 524, either directly, or upon optional optical fiber 522 for transmission by optical fiber to light detector 524. Light detector 524, may generate an electronic signal based upon the absence or presence of received light and may convey the electronic signal to signal demodulator 526 for demodulation and further processing by the system, or network to which optical receiver 504 is integrated.

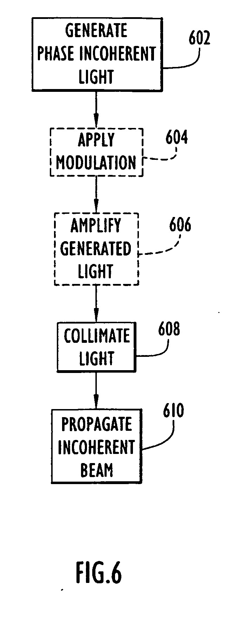

FIG. 6 is a process flow diagram for transmitting a beam of incoherent light using an exemplary embodiment of an incoherent optical beam transmitter, as described above with respect to Fig 5. As shown in FIG. 6, in one exemplary embodiment of the invention, a beam of phase incoherent light may be generated, at step 602, collimated at step 608, and propagated at step 610, into free space in the direction of an optical receiver or other target. Such a simplified process results in the propagation of an incoherent beam of light that is not corrupted by the effects of speckle and therefore increases the power and uniformity of light hitting the optical receiver or selected target.

As further shown in FIG. 6, in an embodiment of the invention in which an incoherent beam is used for high-speed data transmission, additional steps may be included within the process flow. For example, upon generating a phase incoherent beam of light, at step 602, the generated beam may be modulated, at step 604, amplified to a required power level, at step 606, and collimated, at step 608, prior to propagation across a free space, at step 610, in the direction of an optical receiver or selected target.

As described above with respect to FIG. 5, block 506, any phase incoherent light source may be used, at step 602, such as an LED, fiber coupled LED, SLED, fiber coupled SLED, or any other phase incoherent light source. The intensity of the phase incoherent beam of light, at step 602, may be determined using criteria that includes, but is not limited to, the free space link distance, the degree of atmospheric dispersion expected or experienced across the free space link distance and the level of power desired at the receiving device.

As described above with respect to FIG. 5, block 510, any form of internal or external modulation may be used, at step 604, to modulate data upon a transmitted optical beam. For example, an incoherent beam generated at step 602 may be modulated using a Lithium Niobate Mach-Zender interferometer to turn the generated incoherent beam on and off and to thereby encode data upon the beam of light.

As described above with respect to FIG. 5, block 512, an optionally modulated incoherent beam may be amplified, at step 606, prior to propagation across free space. Such amplification is optional depending upon the intensity of the incoherent beam generated at step 602. The need for optional amplification may be determined using criteria that includes, but is not limited to, the free space link distance, the degree of atmospheric absorption expected or experienced across the free space link and the level of power desired at the receiving device. For many optical link distances, assuming that an SLED is used, amplification may not be necessary, as described above with respect to EQ1, EQ2 and EQ3. However, if optical beam amplification is necessary, amplification of a beam is preferably performed after the beam has been modulated due to input power limitations commonly associated with conventional data modulators and WDM multiplexors, described above.

As described above with respect to FIG. 5, block 514, an optionally modulated, optionally amplified incoherent beam may be collimated, at step 608, using a collimating optic lens or mirror prior to propagation across free space. The manner in which a received beam is collimated depends largely upon the how the generated beam of light is transferred to the collimating optic lens or mirror. If, for example, the generated beam of incoherent light is not coupled to an optical fiber, a conventional lens or mirror may be used to collimate the generated beam. However, if the generated beam of incoherent light has been coupled to an optical fiber (e.g., through use of an optical-fiber-coupled SLED) either a GRIN lens or a conventional lens or mirror may be used to collimate the beam of light.

As described above with respect to FIG. 5, block 516, a collimated beam of incoherent light may be propagated, at step 610, directly across a free space or propagation of the incoherent beam may be assisted with the use of propagation optics, such as a telescope, and/or the use of active pointing and tracking controls. Although the effects of scintillation in the transmitted beam are substantially reduced through the use of a phase incoherent beam, in accordance with the present invention, active pointing and tracking controls may still be required to avoid scintillation due to beam wander, as described above. Fortunately, elimination of speckle in a transmitted beam increases the effectiveness of conventional active pointing and tracking controls, resulting in a further reduction in scintillation due to beam wander, as described above.

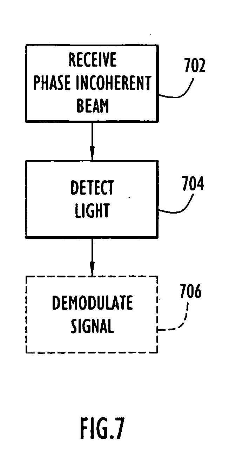

FIG. 7 is a process flow diagram for receiving a beam of incoherent light using an exemplary embodiment of an incoherent optical beam receiver, as described above with respect to FIG. 5. As shown in FIG. 7, an incoherent beam is received, at step 702, and focused upon a light detection device which detects the presence or absence of light, at step 704. As described above with respect to FIG. 5, blocks 518 - 522, a collimated beam of incoherent light may be received, at step 702, by a receiving lens either directly from free space or via an optional reception optics/controls module, such as a telescope and/or an active pointing and tracking control system. The received beam of light may be focused upon a light detector, either directly, or transmitted to a light detector via an optional optical fiber pathway. Typically the light detection device produces an electromagnetic signal based upon the presence of absence of detected light. Depending upon the nature of the reception, no further processing is required. However, if the incoherent beam is modulated, the light detection device typically acts as a transducer that produces an electronic signal based upon the absence or presence of light. In such a case, the electronic signal may be optionally demodulated, at step 706, to retrieve information encoded upon the received phase incoherent beam of light.

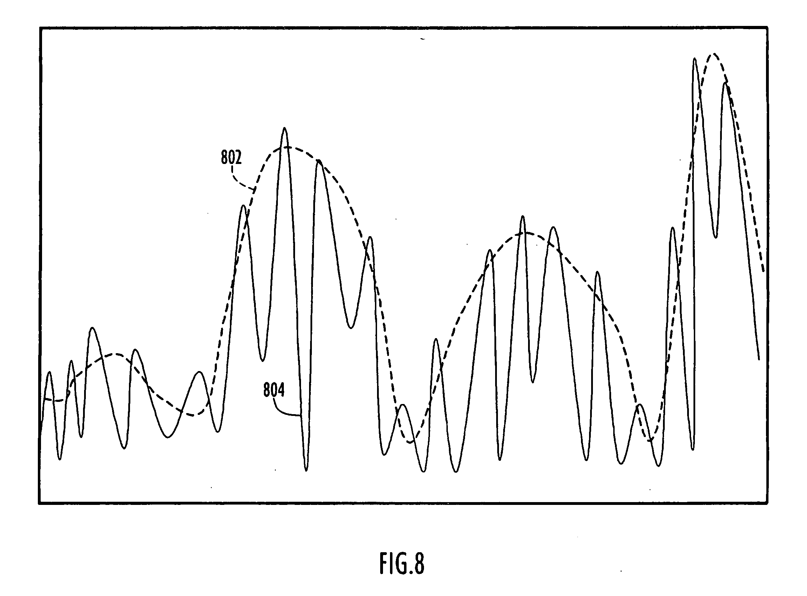

FIG. 8 is a representative comparison of expected power measurements as may be recorded by a free space optical receiver for an incoherent beam of light and a coherent beam of light, each of the same initial intensity, after each beam has passed through the same atmospheric turbulence. Curve 802 presents a representative plot of expected power that may be delivered by the incoherent optical beam to a target or receiver. As described above, and as represented by curve 802, such an incoherent beam is not affected by speckle, but may still include scintillation as a result of beam wander introduced by atmospheric turbulence. Curve 804 presents a representative plot of expected power that may be delivered by the coherent optical beam to a target or receiver. As described above, and as represented by curve 804, such a received coherent beam may include scintillation as a result of speckle as well as beam wander introduced by atmospheric turbulence. As demonstrated in FIG. 8, power measurements for a coherent beam (i.e., curve 804) may be expected to conform with a power envelope defined by scintillation due to beam wander (i.e., the power envelope defined by incoherent beam 802), yet include additional losses of power as a result of scintillation due to speckle.

It may be appreciated that the embodiments described above and illustrated in the drawings represent only a few of the many ways of applying incoherent light to reduce scintillation and improve the reliability of free space optical beam transmissions. The present invention is not limited to the specific embodiments disclosed herein and variations of the method and apparatus described here may also be used to reduce scintillation and improve optical beam transmissions.

The free space optical beam transmission system and components described here can be implemented in any number of hardware and software units, or modules, and is not limited to any specific hardware module and/or software module architecture. Each module may be implemented in any number of ways and is not limited in implementation to execute process flows precisely as described above. The free space optical beam transmission system described above and illustrated in the flow charts and diagrams may be modified in any manner that accomplishes the functions described herein. It is to be understood that various functions of the free space optical beam transmission system may be distributed in any manner among any quantity (e.g., one or more) of hardware and/or software modules or units, computer or processing systems or circuitry.

The free space optical beam transmission system of the present invention is not limited to any particular use or purpose, but may be used within any optical system in which a beam of light may be transmitted across a free space for any purpose. For example, applications may range from an unmodulated directed beacon to a highly modulated multi-channel high-speed optical data link capable of transmitting data over a free space link at transmission rates as high and/or higher than conventional and future laser/coherent light based systems. Embodiments of the incoherent beam free space optical beam transmission system may include, but are not limited to, optical range finders, optical targeting systems, firearms and/or firearm adapters that propagate a beam of light in place of firing a solid projectile, vehicle speed tracking and monitoring systems (e.g., police motor vehicle speed limit enforcement "radar" systems), long range electronic security beams, and/or virtually any other system in which coherent laser beams may be used. Depending upon the nature of the application in which the free space optical beam transmission system of the present invention is used, such as targeting systems and speed tracking systems, an optical receiver may not be required.

It is to be understood that processor based controls for data modulators, beam tracking and control systems and other modules included within the free space optical beam transmission system components may be implemented in any desired computer language and/or combination of computer languages, and could be developed by one of ordinary skill in the computer and/or programming arts based on the functional description contained herein and the flow charts illustrated in the drawings. Further, the free space optical beam transmission system may include commercially available components tailored in any manner to implement functions performed by the free space optical beam transmission system described here. Free space optical beam transmission system component software may be available or distributed via any suitable medium (e.g., stored on devices such as CD-ROM and diskette, downloaded from the Internet or other network via packets and/or carrier signals, downloaded from a bulletin board via carrier signals, or other conventional distribution mechanisms).

The free space optical beam transmission system may accommodate any quantity and any type of data files and/or databases or other structures (e.g., ASCII, binary, plain text, or other file/directory service and/or database format, etc.) used to control any aspect of optical beam modulation and/or any other aspect of system component control. Further, any references herein to software, or commercially available applications, performing various functions generally refer to processors performing those functions under software control. Such processors may alternatively be implemented by hardware or other processing circuitry. The various functions of the free space optical beam transmission system may be distributed in any manner among any quantity (e.g., one or more) of hardware and/or software modules or units.

Processing systems or circuitry, may be disposed locally or remotely of each other and communicate via any suitable communications medium (e.g., hardwire, wireless, etc.). The software and/or processes described above and illustrated in the flow charts and diagrams may be modified in any manner that accomplishes the functions described herein.

From the foregoing description it may be appreciated that the present invention includes a method and apparatus for propagating a beam of optical light in which the effects of atmospheric turbulence upon the propagated optical beam are greatly reduced. By transmitting an optical beam that is substantially phase incoherent, the present invention greatly reduces scintillation in a received optical beam signal due to atmospheric speckle. Further, reducing the effects of atmospheric speckle increases the effectiveness of conventional active pointing and tracking techniques, thereby allowing additional reductions in optical beam scintillation by allowing contributions to signal scintillation due to beam wander to be further reduced.

Having described preferred embodiments of a method and apparatus for free space optical communication using incoherent light, it is believed that other modifications, variations and changes may be suggested to those skilled in the art in view of the teachings set forth herein. It is therefore to be understood that all such variations, modifications and changes are believed to fall within the scope of the present invention as defined by the appended claims.

**Claims**

1. A method comprising:

   (a) generating (602) a beam of light;
   (b) collimating (608) the beam of light;
   (c) propagating (610) the collimated beam of light across a free space; and
   (d) modulating (604) the beam of light to encode data upon the beam of light;
   **characterized in that**:

   in step (a), for reducing atmospheric scintillation in the beam of light transmitted across the free space, a phase incoherent beam of light is generated with a superluminescent light emitting diode.

2. The method of claim 1, wherein in step (a) the substantially phase incoherent beam of light is generated with a fiber-optic coupled superluminescent light emitting diode.

3. The method of claim 1 or 2, wherein step (a) further includes the step of amplifying (606) the incoherent beam of light with a light amplifier, or an Erbium Doped Fiber Amplifier.

4. The method of 1, wherein step (a) further includes the step of filtering the incoherent beam of light to generate an incoherent beam of light containing a reduced wavelength spectrum.

5. The method one of the preceding claims, wherein step (a) further includes the step of bandwidth limiting the incoherent beam into a plurality of bandwidth channels.

6. The method of one of the preceding claims, wherein step (b) further includes the step of collimating the beam of light with a gradient index lens, a conventional optical lens, or an optical mirror.

7. The method of one of the preceding claims, wherein step (c) further includes the step of focusing the beam of light onto a primary focal plane of a telescope.

8. The method of one of the preceding claims, wherein step (c) further includes the step of directing the optical beam towards an optical receiver using active pointing techniques, or static pointing techniques.

9. The method of one of the preceding claims, wherein step (d) further includes the step of modulating the beam using an interferometer to toggle the light beam to at least one of on and off, or modulating wavelength division multiplexing channels within the beam of light.

10. The method of one of the preceding claims, further comprising step (e) of receiving (702) the incoherent beam from free space.

11. The method of claim 10, wherein step (e) further includes the step of tracking the received beam of light using active pointing and tracking techniques, or detecting (704) at least one of light and darkness within the received beam of light, thereby producing a received data stream.

12. The method of claim 11, wherein step (e) further includes the step of demodulating (706) the received data stream.

13. An apparatus (502) comprising:

   - a light source (506) to generate a beam of light;
   - a collimating optics (514) to collimate the beam of light;
   - a propagating optics (516) to propagate the collimated beam of light across a free space;
   - a modulator (510) to modulate the phase incoherent beam of light with data;

   **characterized in that**:

   the light source is a superluminescent light emitting diode generating a phase incoherent beam of light for transmitting the beam of light across the free space in a manner that reduces atmospheric scintillation in the transmitted beam of light.

14. The apparatus of 13, wherein the light source is a fiber-optic coupled superluminescent light emitting diode.

15. The apparatus of claim 13 or 14, further comprising a light amplifier (512) to amplify the incoherent beam of light.

16. The apparatus of 15, wherein the light amplifier is an Erbium Doped Fiber Amplifier.

17. The apparatus of one of claims 13 to 16, wherein the light source further includes a filter to bandwidth limit the generated incoherent beam.

18. The apparatus of one of claims 13 to 17, wherein the collimating optics is a gradient index lens, a conventional optical lens or an optical mirror.

19. The apparatus of one of claims 13 to 18, wherein the propagating optics is a telescope, and/or includes

   - an active pointing and tracking module to control the direction in which the incoherent beam is propagated, and/or
   - a static pointing module to control the direction in which the incoherent beam is propagated.

20. The apparatus of one of claims 13 to 19, wherein the modulator further includes:

   - an encoding module to encode data upon the beam of light; and/or
   - a wavelength division multiplexing module to modulate wavelength division multiplexing channels within the beam of light.

21. The apparatus of one of claims 13 to 20, wherein the modulator (510) is an interferometer to toggle the light beam to at least one of on and off.

**Patentansprüche**

1. Verfahren, das aufweist:

   (a) Erzeugen (602) eines Lichtstrahls;
   (b) Kollimieren (608) des Lichtstrahls;
   (c) Ausbreiten (610) des kollimierten Lichtstrahls durch einen freien Raum; und
   (d) Modulieren (604) des Lichtstrahls zum Codieren von Daten auf den Lichtstrahl;

   **dadurch gekennzeichnet, dass**:

   in Schritt (a) mit einer superstrahlenden Leuchtdiode ein phaseninkohärenter Lichtstrahl erzeugt wird, um eine atmosphärische Szintillation in dem durch den freien Raum übertragenen Lichtstrahl zu reduzieren.

2. Verfahren gemäß Anspruch 1, bei dem in Schritt (a) der im Wesentlichen phaseninkohärente Lichtstrahl mit einer faseroptisch gekoppelten, superstrahlenden Leuchtdiode erzeugt wird.

3. Verfahren gemäß Anspruch 1 oder 2, bei dem in Schritt (a) ferner der Schritt des Verstärkens (606) des inkohärenten Lichtstrahls mit einem Lichtverstärker oder einem erbiumdotierten Faserverstärker enthalten ist.

4. Verfahren gemäß Anspruch 1, bei dem in Schritt (a) ferner der Schritt des Filterns des inkohärenten Lichtstrahls zum Erzeugen eines inkohärenten Lichtstrahls, der ein reduziertes Wellenlängenspektrum enthält, enthalten ist.

5. Verfahren gemäß einem der vorangegangenen Ansprüche, bei dem in Schritt (a) ferner der Schritt der Bandbreitenbeschränkung des inkohärenten Strahls in eine Vielzahl von Bandbreitenkanälen enthalten ist.

6. Verfahren gemäß einem der vorangegangenen Ansprüche, bei dem in Schritt (b) ferner der Schritt des Kollimierens des Lichtstrahls mit einer Gradientenindexlinse, einer konventionellen optischen Linse oder einem optischen Spiegel enthalten ist.

7. Verfahren gemäß einem der vorangegangenen Ansprüche, bei dem in Schritt (c) ferner der Schritt des Fokussierens des Lichtstrahls auf eine primäre Brennebene eines Teleskops enthalten ist.

8. Verfahren gemäß einem der vorangegangenen Ansprüche, bei dem in Schritt (c) ferner der Schritt des Richtens des optischen Strahls auf einen optischen Empfänger unter Anwendung aktiver Zielverfahren oder statischer Zielverfahren enthalten ist.

9. Verfahren gemäß einem der vorangegangenen Ansprüche, bei dem in Schritt (d) ferner der Schritt des Modulierens des Strahls unter Verwendung eines Interferometers zum mindestens Ein- oder Ausschalten des Lichtstrahls oder des Modulierens von Wellenlängenmultiplexkanälen innerhalb des Lichtstrahls enthalten ist.

10. Verfahren gemäß einem der vorangegangenen Ansprüche, das ferner Schritt (e) des Empfangens (702) des inkohärenten Strahls aus dem freien Raum aufweist.

11. Verfahren gemäß Anspruch 10, bei dem in Schritt (e) ferner der Schritt des Verfolgens des empfangenen Lichtstrahls unter Anwendung aktiver Ziel- und Verfolgungsverfahren oder des Detektierens (704) von mindestens Licht oder Dunkel innerhalb des empfangenen Lichtstrahls, wodurch ein Empfangsdatenstrom entsteht, enthalten ist.

12. Verfahren gemäß Anspruch 11, bei dem in Schritt (e) ferner der Schritt des Demodulierens (706) des Empfangsdatenstroms enthalten ist.

13. Vorrichtung (502), die aufweist:

   - eine Lichtquelle (506) zum Erzeugen eines Lichtstrahls;
   - eine Kollimationsoptik (514) zum Kollimieren des Lichtstrahls;
   - eine Ausbreitungsoptik (516) zum Ausbreiten des kollimierten Lichtstrahls durch einen freien Raum;
   - einen Modulator (510) zum Modulieren des phaseninkohärenten Lichtstrahls mit Daten;

   **dadurch gekennzeichnet, dass**:

   die Lichtquelle eine superstrahlende Leuchtdiode ist, die einen phaseninkohärenten Lichtstrahl zum Übertragen des Lichtstrahls durch den freien Raum in einer Weise erzeugt, bei der die atmosphärische Szintillation im übertragenen Lichtstrahl reduziert wird.

14. Vorrichtung gemäß Anspruch 13, bei welcher die Lichtquelle eine faseroptisch gekoppelte, superstrahlende Leuchtdiode ist.

15. Vorrichtung gemäß Anspruch 13 oder 14, die ferner einen Lichtverstärker (512) zum Verstärken des inkohärenten Lichtstrahls aufweist.

**16.** Vorrichtung gemäß Anspruch 15, bei welcher der Lichtverstärker ein erbiumdotierter Faserverstärker ist.

**17.** Vorrichtung gemäß einem der Ansprüche 13 bis 16, bei der die Lichtquelle ferner einen Filter zur Bandbreitenbeschränkung des erzeugten inkohärenten Strahls besitzt.

**18.** Vorrichtung gemäß einem der Ansprüche 13 bis 17, bei der die Kollimationsoptik eine Gradientenindexlinse, eine konventionelle optische Linse oder ein optischer Spiegel ist.

**19.** Vorrichtung gemäß einem der Ansprüche 13 bis 18, bei der die Ausbreitungsoptik ein Teleskop ist und/oder besitzt

- ein aktives Ziel- und Verfolgungsmodul zum Steuern der Richtung, in die der inkohärente Strahl ausgebreitet wird, und/oder
- ein statisches Zielmodul zum Steuern der Richtung, in die der inkohärente Strahl ausgebreitet wird.

**20.** Vorrichtung gemäß einem der Ansprüche 13 bis 19, bei welcher der Modulator ferner besitzt:

- ein Codiermodul zum Codieren von Daten auf den Lichtstrahl; und/oder
- ein Wellenlängenmultiplexmodul zum Modulieren von Wellenlängenmultiplexkanälen innerhalb des Lichtstrahls.

**21.** Vorrichtung gemäß einem der Ansprüche 13 bis 20, bei welcher der Modulator (510) ein Interferometer ist, um den Lichtstrahl mindestens ein- oder auszuschalten.

## Revendications

**1.** Procédé, comprenant les étapes suivantes :

(a) génération (602) d'un faisceau de lumière ;
(b) collimation (608) du faisceau de lumière ;
(c) propagation (610) du faisceau de lumière collimaté à travers un espace libre ; et
(d) modulation (604) du faisceau de lumière pour coder des données sur le faisceau de lumière ;

**caractérisé en ce que**
dans l'étape (a), pour réduire le scintillement atmosphérique dans le faisceau de lumière transmis à travers l'espace libre, on engendre un faisceau de lumière incohérente en phase avec une diode électroluminescente superluminescente.

**2.** Procédé selon la revendication 1, dans lequel dans l'étape (a) le faisceau de lumière sensiblement incohérente en phase est engendré avec une diode électroluminescente superluminescente couplée au moyen d'une fibre optique.

**3.** Procédé selon la revendication 1 ou 2, dans lequel l'étape (a) inclut encore l'opération consistant à amplifier (606) le faisceau de lumière incohérente avec un amplificateur de lumière, ou avec un amplificateur à fibre dopée à l'erbium.

**4.** Procédé selon la revendication 1, dans lequel l'étape (a) inclut encore l'opération consistant à filtrer le faisceau de lumière incohérente pour générer un faisceau de lumière incohérente contenant un spectre de longueurs d'ondes réduit.

**5.** Procédé selon l'une des revendications précédentes, dans lequel l'étape (a) inclut encore l'opération consistant à limiter la largeur de bande du faisceau incohérent en une pluralité de canaux de largeur de bande.

**6.** Procédé selon l'une des revendications précédentes, dans lequel l'étape (b) inclut encore l'opération consistant à collimater le faisceau de lumière avec une lentille présentant un gradient d'indice, une lentille optique traditionnelle, ou un miroir optique.

**7.** Procédé selon l'une des revendications précédentes, dans lequel l'étape (c) inclut encore l'opération consistant à focaliser le faisceau de lumière sur un plan focal primaire d'un télescope.

8. Procédé selon l'une des revendications précédentes, dans lequel l'étape (c) inclut encore l'opération consistant à diriger le faisceau optique vers un récepteur optique en utilisant des techniques de pointage actives ou des techniques de pointage statiques.

9. Procédé selon l'une des revendications précédentes, dans lequel l'étape (d) inclut encore l'opération consistant à moduler le faisceau en utilisant un interféromètre pour faire basculer le faisceau de lumière au moins dans un état "marche" et "arrêt", ou à moduler dans le faisceau de lumière des canaux multiplexés à division de longueur d'onde.

10. Procédé selon l'une des revendications précédentes, comprenant encore l'étape (e) consistant à recevoir (702) le faisceau incohérent provenant de l'espace libre.

11. Procédé selon la revendication 10, dans lequel l'étape (e) inclut encore l'opération consistant à suivre le faisceau de lumière reçu en utilisant les techniques de pointage et de suivi actives, ou à détecter (704) dans le faisceau de lumière reçu au moins la présence de lumière ou l'obscurité, en produisant ainsi un flux de données reçues.

12. Procédé selon la revendication 11, dans lequel l'étape (e) inclut encore l'opération consistant à démoduler (706) le flux de données reçues.

13. Appareil (502) comprenant :

   - une source de lumière (506) pour générer un faisceau de lumière ;
   - une optique de collimation (514) pour collimater le faisceau de lumière ;
   - une optique de propagation (516) pour propager le faisceau de lumière collimaté à travers un espace libre ;
   - un modulateur (510) pour moduler le faisceau de lumière incohérente en phase avec des données ;

   **caractérisé en ce que**
   la source de lumière est une diode électroluminescente superluminescente qui génère un faisceau de lumière incohérente en phase pour transmettre le faisceau de lumière à travers l'espace libre d'une manière qui réduit le scintillement atmosphérique dans le faisceau de lumière transmis.

14. Appareil selon la revendication 13, dans lequel la source de lumière est une diode électroluminescente superluminescente couplée au moyen d'une fibre optique.

15. Appareil selon la revendication 13 ou 14, comprenant en outre un amplificateur de lumière (512) pour amplifier le faisceau de lumière incohérente.

16. Appareil selon la revendication 15, dans lequel l'amplificateur de lumière est un amplificateur à fibre dopée à l'erbium.

17. Appareil selon l'une des revendications 13 à 16, dans lequel la source de lumière inclut encore un filtre pour limiter la largeur de bande du faisceau incohérent généré.

18. Appareil selon l'une des revendications 13 à 17, dans lequel l'optique de collimation est une lentille à gradient d'indice, une lentille optique traditionnelle, ou un miroir optique.

19. Appareil selon l'une des revendications 13 à 18, dans lequel l'optique de propagation est un télescope et/ou inclut

   - un module de pointage et de suivi actif pour commander la direction dans laquelle le faisceau incohérent est propagé, et/ou
   - un module de pointage statique pour commander la direction dans laquelle le faisceau incohérent est propagé.

20. Apparaît selon l'une des revendications 13 à 19, dans lequel le modulateur inclut encore :

   - un module de codage pour coder des données sur le faisceau de lumière ; et/ou
   - un module de multiplexage à division de longueur d'onde pour moduler des canaux multiplexés en division de longueur d'onde à l'intérieur du faisceau de lumière.

21. Appareil selon l'une des revendications 13 à 20, dans lequel le modulateur (510) est un interféromètre pour faire basculer le faisceau de lumière au moins vers un état "marche" et "arrêt".

FIG.1

FIG.2

FIG.3

DISPERSION RELATIONSHIP FOR HUMID AIR

FIG.4

EP 1 726 109 B1

FIG.5

EP 1 726 109 B1

GENERATE
PHASE INCOHERENT
LIGHT
602

APPLY
MODULATION
604

AMPLIFY
GENERATED
LIGHT
606

COLLIMATE
LIGHT
608

PROPAGATE
INCOHERENT
BEAM
610

FIG.6

```
┌─────────────────────┐
│      RECEIVE        │      702
│ PHASE INCOHERENT    │  ╱
│       BEAM          │
└─────────────────────┘
          │
          ▼
┌─────────────────────┐
│      DETECT         │      704
│      LIGHT          │  ╱
│                     │
└─────────────────────┘
          │
          ▼
┌ ─ ─ ─ ─ ─ ─ ─ ─ ─ ─ ┐
│    DEMODULATE       │      706
│     SIGNAL          │  ╱
│                     │
└ ─ ─ ─ ─ ─ ─ ─ ─ ─ ─ ┘
```

FIG.7

FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5264955 A
- US 20020109884 A
- US 5777768 A